## Europäisches Patentamt

## European Patent Office

## Office européen des brevets

(19)

(11) EP 0 807 611 A1

(12) **EUROPÄISCHE PATENTANMELDUNG**

(43) Veröffentlichungstag:
19.11.1997  Patentblatt 1997/47

(51) Int Cl.⁶: **C03C 17/34**, C03C 27/04

(21) Anmeldenummer: 97107836.5

(22) Anmeldetag: 14.05.1997

(84) Benannte Vertragsstaaten:
**AT BE CH DE DK FI FR GB LI LU NL SE**

(30) Priorität: **14.05.1996 DE 19619356**

(71) Anmelder: **FLACHGLAS
AKTIENGESELLSCHAFT
90766 Fürth (DE)**

(72) Erfinder:
• **Weiss, Josef Dr.rer.nat, Dipl-Chemiker
92509 Nabburg (DE)**

• **Gora, Paul Dipl. -Ing.
92536 Pfreimd (DE)**
• **Krüger, Heinrich, Techn.-Angestellter
92637 Weiden (DE)**
• **Goer, Bernhard, Dr.rer.nat.,Dipl.-Chemiker
45659 Recklinghausen (DE)**

(74) Vertreter: **Honke, Manfred, Dr.-Ing. et al
Patentanwälte,
Andrejewski, Honke & Partner,
Theaterplatz 3
45127 Essen (DE)**

(54) **Glaseinheit, insbesondere optisch vergütete Glaseinheit**

(57)     Glaseinheit (1) mit einem opaken Bereich und mit einem lichtdurchlässigen Bereich, die im opaken Bereich eine Verbundfläche zur Befestigung der Glaseinheit (1) mit Hilfe eines Klebers (6) aufweist. Im opaken Bereich ist zunächst eine aufgedruckte und eingebrannte Maskierungsschicht (4) angeordnet, die Farbstoffbeimengungen aufweist. Dahinter befindet sich eine opake Kleberschutzschicht (5). Die Maskierungsschicht (4) ist so angelegt, daß die Reflexions-charakteristik im sichtbaren Spektralbereich des opaken Bereiches mit der des lichtdurchlässigen Bereiches der Glaseinheit (1) annähernd übereinstimmt. Die Kleberschutzschicht (5) schützt den Kleber (6) gegen Alterung durch Lichtbeaufschlagung.

Fig.3

**Beschreibung**

Die Erfindung betrifft eine Glaseinheit, insbesondere eine optisch vergütete Glaseinheit, mit einem opaken Bereich und mit einem lichtdurchlässigen Bereich, die im opaken Bereich eine Verbundfläche zur Befestigung der Glaseinheit mit Hilfe eines Klebers aufweist. - Glaseinheit bezeichnet im Rahmen der Erfindung einfache Glasscheiben, auch Einscheibensicherheitsglasscheiben oder Verbundglasscheiben, wie sie z. B. als Kraftfahrzeugscheiben, Fassadenplatten und dergleichen üblich sind, aber auch Isolierglaseinheiten aus Außenscheibe, Innenscheibe, Scheibenzwischenraum und Abstandshalter am Rand zwischen Außenscheibe und Innenscheibe. Die Isolierglaseinheiten können eine Luftfüllung oder eine Gasfüllung sowie ggf. weitere Glasscheiben aufweisen. Insbesondere betrifft die Erfindung Glaseinheiten für das sogenannte Structural Glazing. Sofern es sich um eine optisch vergütete Glaseinheit handelt, kann diese eine Optobeschichtung aufweisen. Optobeschichtung bezeichnet jede Beschichtung der Glaseinheit, die einen per Augeninspektion wahrnehmbaren Effekt im sichtbaren Bereich des Lichtspektrums aufweist, gleichgültig, ob die Optobeschichtung primär einem anderen Zweck dient, z. B. als UV-Schutzschicht oder als IR-Reflexionsschicht, einge richtet ist. Hauptsächlich handelt es sich im Rahmen der Erfindung bei der Optobeschichtung um eine optisch wirksame Beschichtung. Die Optobeschichtung ist lichtdurchlässig. Die Glasscheiben der Glaseinheit können aus Klarglas oder aus in der Masse eingefärbtem Glas bestehen.

Glaseinheiten, wie sie vorstehend beschrieben sind, werden im allgemeinen mit Hilfe eines Klebers an einem Träger befestigt, z. B. mit dem in der Karosserie eines Kraftfahrzeuges geformten metallischen Fensterrahmen verbunden. Bei dem Träger kann es sich aber auch um den Abstandshalterrahmen einer Isolierglaseinheit oder um Träger für Fassadenverkleidungen handeln. Als Kleber werden z. B. Silikone, Polysulfide, Polyurethane und andere eingesetzt. Sie sind in der Regel mehr oder weniger lichtempfindlich und altern bei Lichtbeaufschlagung mit der Zeit. Lichtbeaufschlagung meint hier insbesondere den Einfall von elektromagnetischer Strahlung des sichtbaren Spektralbereiches, insbesondere von UV-Strahlung.

Um zu verhindern, daß bei den beschriebenen Glaseinheiten der Kleber durch Lichtbeaufschlagung altert und Schaden nimmt, ist es bekannt, besondere Kleberschutzschichten vorzusehen. Sie werden im Bereich der Verbundfläche so angeordnet, daß sie den Kleber gegen von außen einfallendes Licht abschirmen. Die Kleberschutzschichten sind zumeist schwarze Emailschichten und werden typischerweise mit Hilfe eines Siebdruckverfahrens auf die Oberfläche der zugeordneten Glasscheibe aufgebracht und eingebrannt. Die verwendeten Druckpasten sind Emailfarben und gehen mit der zugeordneten Oberfläche der Glaseinheit beim Einbrennen einen Emailverbund ein. Sie haben insofern einen keramischen Charakter und auch deren Verbindung mit der Glasoberfläche ist keramischer Art. Das gilt für alle Druckfarben, die im folgenden im Rahmen der Erfindung behandelt werden.

Ist bei einer Glaseinheit des beschriebenen Aufbaus die Verbundfläche mit einer schwarzen Kleberschutzschicht versehen, so stört bei vielen Anwendungen dieser schwarze Rand aus ästhetischen Gründen. Der Grund liegt darin, daß sich bei solchen Glaseinheiten die Reflexionscharakteristiken (die Außenansichten) des lichtdurchlässigen Bereichs und des die Kleberschutzschicht umfassenden opaken Bereichs deutlich voneinander unterscheiden, die Verbundfläche also bei Betrachtung von außen deutlich wahrnehmbar ist. Dies gilt insbesondere dann, wenn im lichtdurchlässigen Bereich mindestens eine das Reflexionsverhalten der Glaseinheit modifizierende Optobeschichtung vorhanden ist. Würde man die Optobeschichtung auch im Bereich der Verbundfläche anordnen und darauf die Kleberschutzschicht aufbringen, so würde die Kleberschutzschicht beim Einbrennen die Optobeschichtung im Regelfall zerstören.

Der Erfindung liegt das technische Problem zugrunde, bei einer Glaseinheit des beschriebenen Aufbaus und der beschriebenen Zweckbestimmung die Unterschiede im Reflexionsverhalten des opaken und des lichtdurchlässigen Bereichs weitgehend zu reduzieren, ohne Abstriche beim Schutz des Klebers vor Alterung durch Lichtbeaufschlagung zu machen.

Zur Lösung dieses technischen Problems ist Gegenstand der Erfindung eine Glaseinheit, insbesondere eine optisch vergütete Glaseinheit, mit einem opaken Bereich und mit einem lichtdurchlässigen Bereich, ggf. mit einer Optobeschichtung, die im opaken Bereich eine Verbundfläche zur Befestigung der Glaseinheit mit Hilfe eines Klebers aufweist, mit den folgenden Merkmalen:

1.1)    Im opaken Bereich ist - von außen gesehen zunächst eine aufgedruckte und eingebrannte Maskierungsschicht angeordnet, die Farbstoffbeimengungen aufweist, und dahinter eine opake Kleberschutzschicht,

1.2)    die Maskierungsschicht ist so ausgelegt, daß die Reflexionscharakteristik im sichtbaren Spektralbereich des opaken Bereiches mit der des lichtdurchlässigen Bereiches der Glaseinheit zumindest annähernd übereinstimmt,

wobei die Kleberschutzschicht den Kleber gegen Alterung durch Lichtbeaufschlagung schützt.

Erfindungsgemäß weist also der opake Bereich der Glaseinheit mindestens zwei unterschiedliche Schichten auf, von denen die eine - die Maskierungsschicht - die technische Funktion einer weitgehenden Anpassung der Reflexionscharakteristik des opaken Bereichs an diejenige des lichtdurchlässigen Bereichs übernimmt, während die andere - die opake, im Normalfall schwarze Kleberschutzschicht - die technische Funktion eines Schutzes des auf der Verbundfläche anzuordnenden Klebers vor schädlicher Lichtbeaufschlagung übernimmt. Die erfindungsgemäße Entkopplung beider Funktionen führt auf überraschend einfache Weise zu einer ästhetisch befriedigenden Lösung des der Erfindung zugrundeliegenden Problems.

In der Praxis hat sich gezeigt, daß von einer annähernden Übereinstimmung der Reflexionscharakteristik dann ausgegangen werden kann, wenn die international gebräuchlichen Kenngrößen L∗, a∗, b∗ (siehe DIN 6174) für den opaken Bereich und den lichtdurchlässigen Bereich sich maximal wie folgt unterscheiden:

$$| L^*(\text{opaker Bereich}) - L^*(\text{lichtdurchlässiger Bereich}) | < 10, \text{ vzw. } \leq 5;$$

$$| a^*(\text{opaker Bereich}) - a^*(\text{lichtdurchlässiger Bereich}) | \leq 3, \text{ vzw. } \leq 2;$$

$$| b^*(\text{opaker Bereich}) - b^*(\text{lichtdurchlässiger Bereich}) | \leq 3, \text{ vzw. } < 2.$$

Bei der Auswahl geeigneter Druckfarben für die Maskierungsschicht kann auf eine große Palette von für die Glasbedruckung geeigneten handelsüblichen Einbrennfarben zurückgegriffen werden. Wenn keine Standardfarbe mit geeigneter Reflexionscharakteristik verfügbar ist, kann die gewünschte Farbe ggf. durch Mischen zweier oder mehrerer miteinander verträglicher Farben eingestellt werden. Falls die Maskierungsschicht und die Kleberschutzschicht unmittelbar aufeinander gedruckt werden, muß bei der Farbauswahl für die beiden Schichten zusätzlich auf deren Verträglichkeit untereinander geachtet werden (chemische Verträglichkeit, ähnliche thermische Ausdehnungskoeffizienten etc.).

Wie bereits erwähnt, sind die für die Maskierungsschicht und die Kleberschutzschicht verwendeten Farben Einbrennfarben. Die Maskierungsschicht und die Kleberschutzschicht werden vorzugsweise - eventuell unter Zwischenschaltung einer Trocknungsmaßnahme, z. B. einer Infrarot-Trocknung bei etwa 150° C - aufeinandergedruckt und danach gemeinsam eingebrannt. Bei der Verwendung von Einscheibensicherheitsglas oder anderen vorgespannten Glasscheiben kann das Einbrennen im Rahmen des Vorspannprozesses erfolgen.

Im einzelnen kann die Erfindung auf verschiedene Weise verwirklicht werden. Bei der Glaseinheit ohne Optobeschichtung können die Maskierungsschicht und die Kleberschutzschicht auf der Innenseite oder Außenseite der Glasscheibe (n) der Glaseinheit angeordnet sein. Ist dagegen die Glaseinheit als Einscheibensicherheitsglasscheibe oder Verbundsicherheitsglasscheibe mit einer Optobeschichtung ausgeführt, so ist bei einer Ausführungsform der Erfindung die Optobeschichtung auf der Innenseite der Glaseinheit angeordnet, wobei die Innenseite auch die Maskierungsschicht und die darauf aufgebrachte Kleberschutzschicht trägt. Innenseite meint die der Atmosphäre abgewandte Oberfläche. Es besteht aber bei der Ausführungsform als Einscheibensicherheitsglasscheibe oder Verbundsicherheitsglasscheibe auch die Möglichkeit, die Optobeschichtung auf der Außenseite der Glaseinheit anzuordnen, wobei die gegenüberliegende Seite die Maskierungsschicht und die darauf aufgebrachte Kleberschutzschicht tragen kann.

Im Rahmen der Erfindung liegt es, als Glaseinheit eine Isolierglaseinheit einzusetzen. Handelt es sich um eine Isolierglaseinheit mit Außenscheibe, Innenscheibe, Scheibenzwischenraum und Abstandshalter am Rand zwischen Außenscheibe und Innenscheibe, so lehrt die Erfindung, daß die Außenscheibe vorzugsweise zum Scheibenzwischenraum hin in ihrem lichtdurchlässigen Bereich die Optobeschichtung aufweist und der Abstandshalter mit Hilfe des Klebers an die Kleberschutzschicht angeschlossen ist, die ihrerseits auf die Maskierungsschicht aufgebracht ist, mit der im Randbereich befindlichen Verbundfläche auf der Außenscheibe zum Scheibenzwischenraum hin ausgerüstet ist. Man kann aber auch die Anordnung so treffen, daß die Innenscheibe in ihrem lichtdurchlässigen Bereich zum Scheibenzwischenraum hin die Optobeschichtung aufweist, wobei der Abstandshalter mit Hilfe des Klebers an die Kleberschutzschicht angeschlossen ist, die ihrerseits auf die Maskierungsschicht aufgebracht ist, mit die Verbundfläche auf der Außenscheibe zum Scheibenzwischenraum hin ausgerüstet ist. Es besteht fernerhin die Möglichkeit, die beiden zuletzt beschriebenen Maßnahmen zu kombinieren, also sowohl auf der Innenseite der Außenscheibe als auch auf der Innenseite der Innenscheibe eine Optobeschichtung anzubringen. Der Scheibenzwischenraum kann mit Luft oder mit einem von Luft verschiedenen Gas gefüllt sein, z. B. mit Schwefelhexafluorid, Krypton, Argon oder Mischungen davon.

Von besonderer Bedeutung ist die Erfindung für Ausführungsformen, bei denen als Kleber ein Material auf Basis von Polysulfid oder Polyurethan eingesetzt ist.

Die Lehre der Erfindung führt im sichtbaren Spektralbereich zu der angestrebten Vergleichmäßigung der Außenansicht der Glaseinheit. Das ist insbesondere beim Einsatz im Rahmen des Structural Glazing der Fall, z. B. bei Fassadenverkleidungen. Die erfindungsgemäßen Glaseinheiten können aber auch als Fenster eingesetzt werden, wo sie nicht nur von dem von außen auffallenden Licht beaufschlagt werden, sondern zumindest zeitweise auch von dem Licht, welches den Raum, vor dem sich die Fenster befinden, erhellt.

Im folgenden wird die Erfindung anhand einer lediglich ein Ausführungsbeispiel darstellenden Zeichnung ausführlicher erläutert. Es zeigen in schematischer Darstellung

Fig. 1 einen Schnitt durch eine erfindungsgemäße Glaseinheit,

Fig. 2 eine andere Ausführungsform des Gegenstandes der Fig. 1,

Fig. 3 einen Schnitt durch eine erfindungsgemäße Glaseinheit, die als Isolierglaseinheit ausgebildet ist und

Fig. 4 einen Schnitt durch eine Isolierglaseinheit, die als Fassadenplatte montiert ist.

Die in den Figuren dargestellten Glaseinheiten 1 sind mit einer Optobeschichtung 2 ausgerüstet, die im sichtbaren Spektralbereich eine definierte Reflexionscharakteristik aufweist. Diese Optobeschichtung 2 ist, wie üblich, extrem dünn. Sie ist beispielsweise physikalisch, insbesondere mit Hilfe der Magnetronkathodenzerstäubung oder chemisch z. B. pyrolytisch aufgebracht. Die Glaseinheiten 1 besitzen stets einen opaken Bereich 3, der von der Optobeschichtung 2 frei ist. Darunter wird verstanden, daß die Optobeschichtung 2 im opaken Bereich 3 gar nicht angebracht oder aber zerstört oder entfernt ist.

Der opake Bereich 3 trägt eine im Siebdruckverfahren aufgedruckte Maskierungsschicht 4, die beigemischte Farbstoffe in einer Matrix aufweist und die dem opaken Bereich 3 eine Reflexionscharakteristik vermittelt, die im sichtbaren Spektralbereich mit derjenigen der Optobeschichtung 2 zumindest annähernd übereinstimmt. Zumindest annähernd bedeutet, daß die Farbe und der Reflexionsgrad der Optobeschichtung 2 und des opaken Bereiches 3 bei Augeninspektion der fertigen Glaseinheit im auffallenden Licht sich nicht wesentlich unterscheiden. Auf die Maskierungsschicht 4 ist eine opake Kleberschutzschicht 5 aus einer schwarzen Emailfarbe mittels Siebdruck aufgebracht worden. Auf die Kleberschutzschicht 5 wird im Bereich der Verbundfläche, die hier dem opaken Bereich 3 entspricht ein gegenüber Lichtbeaufschlagung empfindlicher Kleber 6 aufgebracht. - Alle Schichten wurden übertrieben dick gezeichnet.

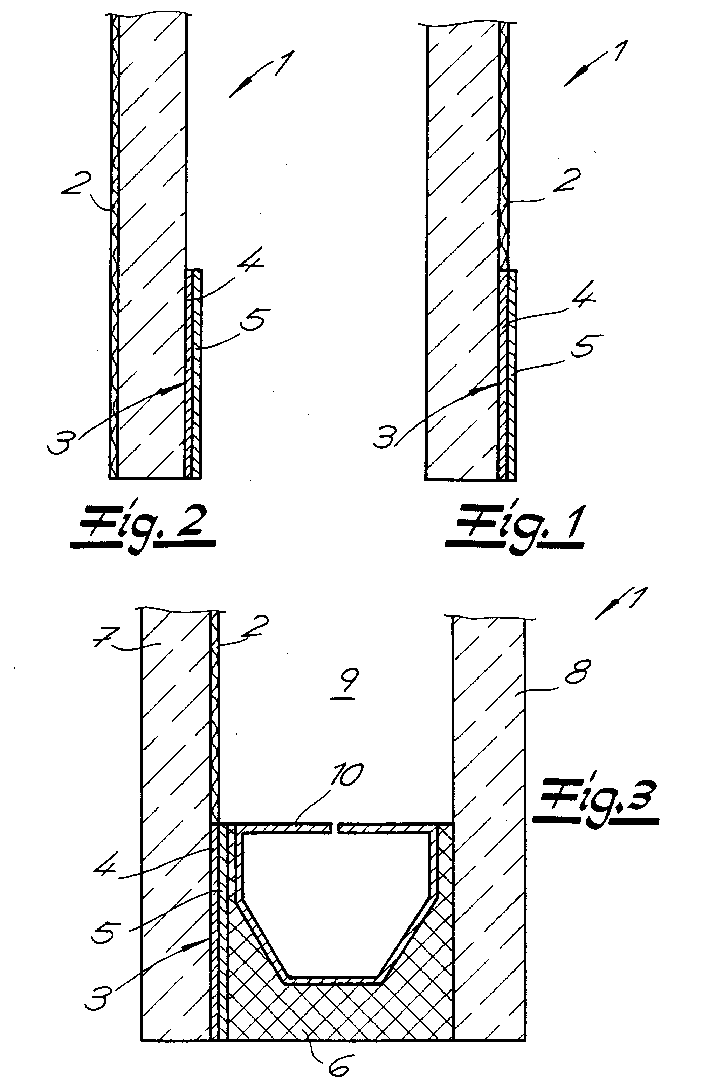

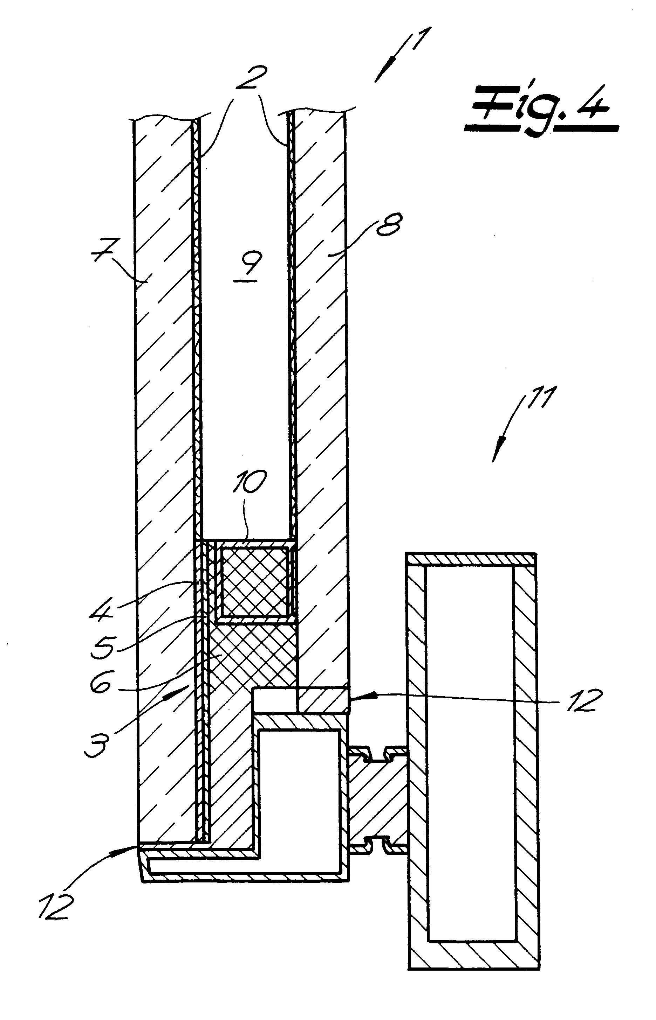

In der Fig. 1 ist die Optobeschichtung 2 auf der Innenseite der Glaseinheit 1 angeordnet und trägt die Innenseite auch die Maskierungsschicht 4 mit der darauf aufgebrachten Kleberschutzschicht 5. In der Fig. 2 erkennt man, daß die Optobeschichtung 2 auf der Außenseite der Glaseinheit 1 angeordnet ist und daß die gegenüberliegende Seite die Maskierungsschicht 4 und die darauf aufgebrachte Kleberschutzschicht 5 trägt.

In der Fig. 3 ist ein Ausschnitt aus einer erfindungsgemäßen Glaseinheit 1 dargestellt, die als Isolierglaseinheit ausgeführt ist. Man erkennt die Außenscheibe 7, die Innenscheibe 8, den Scheibenzwischenraum 9 und den Abstandshalter 10 am Rand zwischen Außenscheibe 7 und Innenscheibe 8. Die Außenscheibe 7 weist auf der Seite, die dem Scheibenzwischenraum 9 zugewandt ist, den gleichzeitig die Verbundfläche bildenden opaken Bereich 3 auf. Man erkennt, daß der Abstandshalter 10 mit Hilfe eines Klebers 6 an die Kleberschutzschicht 5 angeschlossen ist, die ihrerseits wie beschrieben auf die Maskierungsschicht 4 aufgebracht ist. Der Kleber 6, der die Außenscheibe 7 und die Innenscheibe 8 verbindet, kann auch ein anderer sein als der Kleber, der den Abstandshalter 10 mit den Scheiben 7, 8 verbindet. - Es versteht sich, daß die Glaseinheit 1 auf verschiedene Weise mit zugeordneten Bauteilen verbunden werden kann, als Fassadenplatte auch so, wie es die Fig. 4 andeutet. Fig. 4 zeigt einen Schnitt durch eine Isolierglaseinheit, die als Fassadenplatte ausgebildet ist und auf einer Rahmenkonstruktion 11 befestigt ist. Hier sind auch Klotzungselemente 12 vorgesehen.

Im Rahmen der Erfindung verwendbare Druckfarben sind dem Fachmann bekannt. Sie sind z. B. in den Literaturstellen EP 0 300 300 A1 und DE 34 33 408 A1 beschrieben. Diese Farben werden z. B. so aufgebracht, wie es in der Literaturstelle EP 0 535 474 A1 beschrieben ist. Es ist aber auch möglich, sie mit anderen gebräuchlichen Verfahren, z. B. mittels Druckwalzen oder dgl. aufzubringen. Stets sind die Druckfarben sogenannte keramische Farben, die eingebrannt werden. Insoweit entsteht gleichsam ein keramischer Verbund oder Emailverbund mit der Oberfläche der Glasscheiben. Die Dicke der Maskierungsschicht 4 ist so eingerichtet, daß sie ihre farbgebende Funktion erfüllt. Für die Kleberschutzschicht gilt, daß ihre Dicke und das verwendete Material so eingerichtet sind, daß sie ihre Kleberschutzfunktion erfüllt. Die Dicken liegen im Bereich von 0,005 bis 0,05 mm, vorzugsweise bei 0,01 bis 0,02 mm.

Im folgenden wird ein Ausführungsbeispiel anhand der Ausführungsform nach Figur 3 beschrieben:

Eine Isolierglaseinheit mit 8 mm dicker Außenscheibe 7, einem Scheibenzwischenraum 9 von 12 mm sowie einer Außenscheibe 8 von 4 mm Dicke weist als Optobeschichtung 2 eine Wärmeschutzschicht mit folgendem Schichtaufbau auf: $SnO_2$/ITO d = 35 nm, Silber d = 8 nm, NiCr d = 0,5 nm, ITO/$SnO_2$ d = 35 nm. Die Optobeschichtung 2 kann wie in Fig. 3 dargestellt auf der Innenseite der Außenscheibe 7 (Pos. 2) oder aber auf der Außenseite der Innenscheibe 8 angeordnet sein. Die Maskierungsschicht 4 ist auf Position 2 aufgebracht. Sie besteht aus einer handelsüblichen Emailfarbe mit passenden Farbkoordinaten oder wird durch Mischen von im Handel erhältlichen Druckfarben hergestellt.

Im vorliegenden Fall besteht die Farbe aus mehreren Druckfarben der Serie 600 000 der Fa. Cookson Mathey, die so gemischt werden, daß ein RAL-Wert von 7010 erreicht wird. Bei diesen Farben handelt es sich um Emailfarben mit $\geq$ 30 Gew.% Bleioxid und ca. 20 Gew.% Pigmentanteilen (Bleiborosilikatfritten). Auf die Maskierungsschicht ist eine übliche opake Kleberschutzschicht aus schwarzer, für UV-Strahlung und sichtbares Licht undurchlässiger Emailfarbe aufgebracht.

Wird eine derartige Isolierglaseinheit in einem StructuralGlazing-System verglast und wird der im Gebäude befindliche Raum nur gering oder gar nicht beleuchtet, so zeigen die Maskierungsschicht 4 und die Optobeschichtung 2 bei bedecktem Himmel eine ähnliche Reflexionscharakteristik, d. h. Maskierungsschicht 4 und Optobeschichtung 2 sind von außen gesehen kaum zu unterscheiden. Wird dagegen in herkömmlicher Weise eine schwarze Kleberschutzschicht ohne Maskierungsschicht verwendet, dann ist diese deutlich von der Optobeschichtung 2 unterscheidbar.

An einem derartigen Element wurde auch das Reflexionsverhalten gemessen.

Meßgerät: Miniscan MS7S 4000 L, Lichtart D65/10° Gesichtsfeld, diffuse Beleuchtung

| | Reflexionsgrad | Farbkoordinaten | |
| --- | --- | --- | --- |
| | L* | a* | b* |
| Maskierungsschicht + Kleberschutzschicht | 40,95 | -1,59 | -2,95 |
| Optobeschichtung Pos. 3 | 40,10 | -1,09 | -1,53 |
| Optobeschichtung Pos. 2 | 38,5 | -2,0 | -4,8 |
| zum Vergleich schwarze Kleberschutzschicht ohne Maskierungsschicht | 25,92 | -0,10 | -0,65 |

Messungen gemäß DIN 6174 und 5033.

Es ist erkennbar, daß sowohl bei der Anordnung der Optobeschichtung 2 auf der Außenscheibe 7 (Pos. 2) als auch auf der Innenscheibe 8 (Pos. 3) die Reflexionscharakteristik für den opaken Bereich und für den lichtdurchlässigen Bereich sich für die erfindungsgemäße Glaseinheit mit Markierungsschicht 4 und opaker Kleberschutzschicht 5 nur gering unterscheiden, während sowohl L$*$ als auch a$*$ und b$*$ bei der herkömmlichen Bauweise nur mit schwarzer Kleberschutzschicht deutliche Abweichungen zeigen.

**Patentansprüche**

1. Glaseinheit, insbesondere eine optisch vergütete Glaseinheit, mit einem opaken Bereich und mit einem lichtdurchlässigen Bereich, ggf. mit einer Optobeschichtung, die im opaken Bereich eine Verbundfläche zur Befestigung der Glaseinheit mit Hilfe eines Klebers aufweist, mit den folgenden Merkmalen:

   1.1) Im opaken Bereich ist - von außen gesehen zunächst eine aufgedruckte und eingebrannte Maskierungsschicht angeordnet, die Farbstoffbeimengungen aufweist, und dahinter eine opake Kleberschutzschicht,

   1.2) die Maskierungsschicht ist so ausgelegt, daß die Reflexionscharakteristik im sichtbaren Spektralbereich des opaken Bereiches mit der des lichtdurchlässigen Bereiches der Glaseinheit zumindest annähernd übereinstimmt,

   wobei die Kleberschutzschicht den Kleber gegen Alterung durch Lichtbeaufschlagung schützt.

2. Glaseinheit nach Anspruch 1, dadurch gekennzeichnet, daß die Maskierungsschicht und die Kleberschutzschicht auf der Innenseite einer der Glasscheiben der Glaseinheit angeordnet sind.

3. Glaseinheit mit einer Optobeschichtung nach Anspruch 1 oder 2, die als Einscheibensicherheitsglasscheibe oder Verbundsicherheitsglasscheibe ausgeführt ist, wobei die Optobeschichtung auf der Innenseite einer der Glasscheiben der Glaseinheit angeordnet ist und die Innenseite auch die Maskierungsschicht und die darauf aufgebrachte Kleberschutzschicht trägt.

4. Glaseinheit mit einer Optobeschichtung nach Anspruch 1 oder 2, die als Einscheibensicherheitsglasscheibe oder Verbundsicherheitsglasscheibe ausgeführt ist, wobei die Optobeschichtung auf der Außenseite einer der Glasscheiben der Glaseinheit angeordnet ist und die Innenseite dieser Glasscheibe die Maskierungsschicht und die darauf aufgebrachte Kleberschutzschicht trägt.

5. Glaseinheit mit Optobeschichtung nach Anspruch 1, die als Isolierglaseinheit mit Außenscheibe, Innenscheibe, Scheibenzwischenraum und Abstandshalter am Rand zwischen Außenscheibe und Innenscheibe aufgebaut ist, wobei die Außenscheibe zum Scheibenzwischenraum hin die Optobeschichtung aufweist und der Abstandshalter mit Hilfe des Klebers an die Kleberschutzschicht angeschlossen ist, die ihrerseits auf die Maskierungsschicht aufgebracht ist, mit der die Verbundfläche auf der Innenseite der Außenscheibe zum Scheibenzwischenraum hin ausgerüstet ist.

6. Glaseinheit nach Anspruch 1, die als Isolierglaseinheit mit Außenscheibe, Innenscheibe, Scheibenzwischenraum und Abstandshalter am Rand zwischen Außenscheibe und Innenscheibe aufgebaut ist, wobei die Innenscheibe zum Scheibenzwischenraum hin die Optobeschichtung aufweist und der Abstandshalter mit Hilfe des Klebers an die Kleberschutzschicht angeschlossen ist, die ihrerseits auf die Maskierungsschicht aufgebracht ist, mit der die Verbundfläche auf der Innenseite der Außenscheibe zum Scheibenzwischenraum hin ausgerüstet ist.

7. Glaseinheit nach Anspruch 1, die als Isolierglaseinheit mit Außenscheibe, Innenscheibe, Scheibenzwischenraum und Abstandshalter am Rand zwischen Außenscheibe und Innenscheibe aufgebaut ist, wobei die Außenscheibe und die Innenscheibe zum Scheibenzwischenraum hin je eine Optobeschichtung aufweisen und der Abstandshalter mit Hilfe des Klebers an die Kleberschutzschicht angeschlossen ist, die ihrerseits auf die Maskierungsschicht aufgebracht ist, mit der die Verbundfläche auf der Innenseite der Außenscheibe zum Scheibenzwischenraum hin ausgerüstet ist.

_Fig.2_

_Fig.1_

_Fig.3_

*Fig.4*

Europäisches Patentamt

**EUROPÄISCHER RECHERCHENBERICHT**

Nummer der Anmeldung

EP 97 10 7836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 951 525 A (BALLENTINE JOHN D) 20.April 1976 * Ansprüche; Abbildung 2; Beispiel 2 * * Spalte 3, Zeile 46 - Spalte 5, Zeile 12 * | 1 | C03C17/34 C03C27/04 |
| | --- | | |
| A | US 4 610 115 A (THOMPSON JR ALBERT E) 9.September 1986 * Ansprüche; Abbildungen 1,2 * * Spalte 2, Zeile 23 - Zeile 43 * * Spalte 3, Zeile 20 - Spalte 6, Zeile 56 * | 1 | |
| | --- | | |
| A | EP 0 358 768 A (ASAHI GLASS CO LTD) 21.März 1990 * Ansprüche 1-4; Abbildung 2 * * Seite 6, Zeile 24 - Seite 7, Zeile 24 * | 1 | |
| | --- | | |
| A | FR 2 708 591 A (SAINT GOBAIN VITRAGE INT) 10.Februar 1995 * Seite 8, Zeile 19 - Seite 9, Zeile 19 * * Ansprüche; Abbildungen 1-7 * | 1-7 | |
| | --- | | **RECHERCHIERTE SACHGEBIETE (Int.Cl.6)** |
| A | EP 0 421 833 A (SAINT GOBAIN VITRAGE) 10.April 1991 * Abbildungen 2,3 * * Spalte 4, Zeile 3 - Zeile 45 * | 1 | C03C |
| | --- | | |
| A | EP 0 667 425 A (NORSK HYDRO AS) 16.August 1995 * Ansprüche; Abbildungen 3,5 * * Spalte 2, Zeile 52 - Spalte 3, Zeile 52 * | 1 | |
| | ----- | | |

Der vorliegende Recherchenbericht wurde für alle Patentansprüche erstellt

| Recherchenort | Abschlußdatum der Recherche | Prüfer |
|---|---|---|
| BERLIN | 19.September 1997 | Kuehne, H-C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P04C03)